# EUROPEAN PATENT APPLICATION

(11) **EP 0 689 045 A1**
(43) Date of publication of application: **27.12.1995**
(21) Application number: 95201641.8
(22) Date of filing: 19.06.1995
(51) Int. Cl.: G01N 21/47, G01J 3/433, A61B 5/00

(54) **Multi-frequency modulation spectrometer**

(30) Priority: 23.06.1994 EP 94201798
(71) Applicant: PHILIPS ELECTRONICS N.V., 5621 BA Eindhoven (NL)
(72) Inventor: Papaioannou, Dimitrios, NL-5656 AA Eindhoven (NL); 't Hooft, Gert Wim, NL-5656 AA Eindhoven (NL)
(74) Representative: Schouten, Marcus Maria

(57) **Abstract**

A two-tone spectrometer is designed to measured light which is scattered in an opaque sample. The incident light beam is scanned over the sample so as to form a collection of detection signals from which an image of scattering centres in the sample, for example a woman's breast. Very high frequency modulation at two closely spaced modulation frequencies of e.g. 300GHz±10MHz is carried out by means of a very high frequency optical phase modulator and a low frequency optical phase modulator.

## Description

The invention relates to a multi-frequency modulation spectrometer comprising an illumination system with a light source for illuminating at least a portion of a sample space with light having at least two frequencies, a frequency sensitive light detection device with a photosensor for detection of light leaving the sample, an optical system for imaging the output face of the illumination system *via* a sample in the sample space on the photosensor, a signal processing system for processing an electronic detection signal from the photosensor.

An instrument of said kind is known from the paper *Frequency modulation spectroscopy at 1.3µm using InGaAsP lasers: a prototype field instrument for atmospheric chemistry research* by T.J. Johnson et al. in Applied Optics **30**(1991)407-413.

The known instrument comprises a long-wavelength (1.3*µ*m) semiconductor laser of which the output light is frequency modulated simultaneously at two closely spaced RF frequencies, namely at 461 ± 1.5MHz. The frequency modulation is in fact performed by modulation of the injection current supplied to the laser. The frequency modulated light is passed through the sample space which has the shape of a multiple reflection (White) cell. The light which exits the White cell is detected by a photodiode and from the detection signal of the photodiode a high-frequency component is filtered out by a low-pass filter. Subsequently, a low-frequency beat signal of two closely spaced RF signals that are contained in the detection signal is generated by a mixer which beats the output signal of the low-pass filter against a signal having a stable frequency equal to the separation of the RF modulation frequencies of the output light of the semiconductor laser, i.e. 3MHz. The amplitude of the beat signal of the closely spaced RF signals is representative of the differences between optical densities at the optical frequencies at either of the high-frequency modulation sidebands of the laser light. That is, the amplitude of the beat signal of the closely spaced RF signals is representative of differences between absorption within the sample at a mean modulation frequency above the central optical carrier frequency of the semiconductor laser, i.e. above the frequency of the laser light when no modulation is applied, and absorption at a mean modulation frequency below said central carrier frequency. Hence, the amplitude of the beat signal provides information on the absorption spectrum of the sample material. As the beat signal has a frequency which is equal to the difference between the frequencies of the closely spaced side bands, i.e. 3MHz, the response speed of the detector need only be of the order of one or a few MHz. Because detection can be performed at such a low speed a very high sensitivity can be achieved, so that absorption by very small quantities of material of the sample and/or very weak absorption by material of the sample can be measured.

The known instrument is designed for research in atmospherical chemistry. The known instrument requires that the light travels through the sample space along a very long pathlength, so as to enable measurement of minute concentrations of trace gasses. The cited reference mentions a pathlength of 200m which is formed by multiple reflections. When the sample scatters light strongly, hardly any light will be able travel in a straight direction along such a long pathlength. When the sample put in the sample space is not sufficiently transparent hardly any light will exit the White cell and no beat signal with a sizeable signal-to-noise ratio can be detected. The sample may be that opaque that the intensity of the transmitted light may even be so small that it remains below the detection threshold of the photodiode. Hence, the known instrument is not suitable to perform spectroscopy on a sample which is due to scattering to some extent opaque to the light emitted by the laser. In particular, the known instrument is not able to perform spectroscopy on human or animal tissue in order to examine such tissue for the presence of lesions, such as carcinomae and to distinguish benign tumours from malignant tumours.

An object of the invention is *inter alia* to provide a high-sensitivity spectrometer for carrying out spectrometry a sample which is, owing to scattering, to a high degree opaque for light emitted by the light source of the spectrometer.

To achieve this object the spectrometer according to the invention is characterized in that the light detection device is positioned so as to detect light scattered in the sample space.

When the sample is substantially opaque for the incident light from the light source, the luminous intensity of light scattered by the sample is far greater than the intensity of light transmitted through the sample. Hence, the positioning of the photosensor so as to detect scattered light enables formation of a sizeable detection signal. The light-detection device further is sensitive to different frequency components of the detection signal and is arranged to form a signal which is representative for differences between frequency components of the detection signal. For example the frequency sensitive light detection system is provided with an electronic circuit that is sensitive to frequency components of the electronic detection signal may be arranged to form a low-frequency, e.g. at an RF frequency, beat signal of frequency components of the detection signal.

A multi-frequency spectrometer according to the invention is in particular suitable for non-invasive real-time medical analysis.

A preferred embodiment of a multi-frequency spectrometer in which the illumination system is arranged to illuminate a portion of the sample space with a narrow light beam, according to the invention is characterized in that the photosensor is positioned so as to receive light scattered by the sample along a direction different from the direction of incidence on the sample of the narrow light beam from the illumination system.

The sample is selectively and locally illuminated by a relatively narrow incident beam which has a transverse cross-section substantially smaller than the size of the sample. When the incident light is scattered at a scattering centre in the sample, in almost al instances scattered light exits the sample at a scattering angle with respect to the incident light. The scattering angle is approximately the angle of the scattered light with the central ray of the narrow beam, because the incident light beam is narrow. The positioning of the photosensor at a non-straight angle, i.e. not along the forward propagation direction, with respect to the incident light beam, achieves that the photosensor intercepts light which is scattered in the sample over a selected range of scattering angles. The selected range is determined by the acceptance characteristic and the positioning of the photosensor.

It is also an object of the invention to provide an instrument for performing high-sensitivity imaging spectroscopy of said object.

To achieve this further object a preferred embodiment of a spectrometer according to the invention is further characterized in that the optical system is provided with a confocal optical arrangement.

Because scattering occurs within the sample, light which enters the sample at the illuminated spot may exit the sample from positions outside the illuminated spot. The confocal optical arrangement illuminates mainly a discrete sample portion on or below the surface of the sample, and provides that light from only said sample portion is imaged sharply on the photosensor. A further improvement is achieved in that the optical system may be provided with a spatial filter between the sample and the light detection system. The spatial filter is positioned so as to prevent that light which leaves the sample outside said sample portion reaches the photosensor. Within the confocal arrangement light from said sample portion is concentrated at an intermediate focus. A simple pin-hole placed in the intermediate focus in the confocal optical arrangement functions as a spatial filter, which avoids almost completely that fight which leaves the sample from portions other than the illuminated sample portion reaches the photosensor Thus, cross-talk between light leaving from different positions on or within the sample is substantially avoided. As the pinhole is made narrower, the size of the sample portion from which scattered light may reach the photosensor is made smaller, so that the spatial resolution of the spectrometer is increased.

A further preferred embodiment of a spectrometer according to the invention is characterized in that the optical system is provided with scanning means to scan the light beam from the illumination system over at least a portion of the sample.

The incident light beam is directed at different points of the sample. That is to say, the incident light beam is scanned over the surface of the sample. As a result the light successively captured by the photosensor during a scan has been scattered at various scattering centres in the sample. Differences in the scattering centres give rise to differences in the intensities of light scattered by each of them. For each of the points of incidence a detection signal is generated by the photosensor. The resulting collection of detection signals contains information on the internal structure of the sample in so far that structure is represented in the spatial distribution and the scattering properties of the scattering centres. The signal processing unit derives from said collection of detection signals an image signal corresponding to an image which represents at least part of the internal structure of the sample.

A further preferred embodiment of a multi-frequency spectrometer according to the invention is characterized in that the signal processing system comprises a mixer to derive a beat signal from the frequency components of the electronic detection signal.

The relative amplitudes of frequency components of the detection signal represent the frequency dependence of scattering and/or absorption properties of a scattering centre in the sample. This frequency dependence contains information on for instance the material composition and morphology of said scattering centre. The amplitude of the beat signal of the closely spaced modulation frequency components is representative of a difference between scattering and/or absorption within the sample at a frequency which is a mean modulation frequency above the central frequency of the light from the light source and scattering and/or absorption at a frequency which is a mean modulation frequency below said central frequency. The beat signal has a frequency which is the difference of the frequencies of the respective frequency components of the detection signal. Consequently, the beat signal has a frequency which is lower, or even very much lower, than the frequencies contained in the detection signal itself. Hence, the beat signal is preferably employed as an input for further signal processing because it does not require complicated and expensive high-frequency signal processing circuitry.

A further preferred embodiment of a multi-frequency spectrometer according to the invention is characterized in that the light source is a semiconductor laser.

The selection of a semiconductor laser as a light source in a multi-frequency spectrometer has as an advantage that such a semiconductor laser can be frequency modulated by modulation of the injection current which is passed through the active layer of the semiconductor laser diode. Modulation of the injection current of the semiconductor laser gives rise to a modulation of the refractive index of the active layer of the semiconductor laser. As a result, the output light of the semiconductor laser is frequency modulated with the modulation frequency of the current modulation. Moreover, a semiconductor laser diode has very small dimensions so that the choice of a semiconductor laser light source adds to the design of a compact multi-frequency spectrometer.

A further preferred embodiment of a multi-frequency spectrometer wherein the illumination system comprises an optical modulator to act on light generated by the light-source for generating light with said at least two frequencies, according to the invention is characterized in that said optical modulator is a frequency modulator. The use of multi-frequency modulation of the light source has as a further advantage that the beat signal is substantially free of phase noise. In particular for two-frequency transmission modulation spectroscopy this is known *per se* from the article *'Frequency Modulation (FM) Spectroscopy'* by G.C. Bjorklund et al. in Applied Physics **B42**(1983)145-152. Since the beat signals that are acquired from two-frequency spectroscopy have almost no phase noise they are suitable as input to the signal processing unit to form the image signal having a high signal-to-noise ratio. Preferably, the frequency band of the light from the light source, i.e. the line-width of the light source, is smaller than the modulation frequencies so as to avoid interference between the modulation frequencies of the light source and frequencies within the line-width of the band of central carrier frequencies of the light source.

A further preferred embodiment of a multi-frequency spectrometer according to the invention is characterized in that the frequency modulator comprises an optical phase modulator arranged to modulate the phase of the light generated by the light source.

The modulation device comprises an optical very-high frequency (VHF) phase modulator. In this embodiment the light source is operated in a continuous mode and emits light in a narrow frequency band of e.g. one or a few MHz bandwidth. By way of the VHF phase modulator and a low-frequency (LF) frequency modulator operating at RF-frequencies of e.g. one or a few tens of MHz, the light from the light source is converted into two-frequency modulated light with modulation sidebands at e.g. frequencies of 300GHz±10MHz.

The VHF optical phase modulator comprises a stretch of fibre arranged to allow light from the light source to pass through it. An high-frequency optical amplitude modulator, which e.g. consists of a dual frequency fibre laser, pumps the stretch of fibre with amplitude modulated light. Such a high-frequency optical amplitude modulator is for example constructed as a dual frequency fibre laser which forms the amplitude modulation as a beating of two optical frequencies supplied by the dual frequency fibre laser. A dual frequency fibre laser is known *per se* form the article *'Dual frequency all fibre grating laser source'* by S.V. Chernikov et al. in Electronics letters **29**(1993)1089-1090. The amplitude modulated pump light causes modulation of the refractive index of the stretch of fibre. Thereby, the light from the light source is phase modulated at the modulation frequency of the high-frequency optical modulator and the light leaving the stretch of fibre is frequency modulated at the modulation frequency of the high-frequency optical modulator. An optical VHF phase modulator is formed by coupling a high-frequency optical modulator operating at several hundreds of GHz to the stretch of fibre.

The LF frequency modulator is preferably an electro-optical modulator. An alternating voltage with a frequency of e.g. one or a few tens of MHz supplied to the electro-optical modulator causes light passing through the electro-optical modulator is frequency modulated at the frequency of the alternating voltage. The light from the light source is converted by the optical VHF and LF modulators into two-frequency modulated light having modulation sidebands at e.g. 300GHz±10MHz.

As an alternative, the light source is frequency modulated at relatively low frequencies of one or a few tens of MHz and the optical VHF phase modulator carries-out a very high frequency modulation to the low-frequency modulated light produced by the light source. As a result of a refractive index modulation by the optical VHF phase modulator two-frequency modulated light having modulation sidebands in the region of several hundreds of GHz at e.g. 300GHz±10MHz, is generated by the second optical phase modulator.

The incorporation of the optical phase modulator giving rise to modulation sidebands at very high frequencies of several hundreds of GHz is particularly to be preferred in a two-frequency spectrometer designed for medical imaging. In medical imaging scattering spectroscopy of human or animal tissue is performed. Since human or animal tissue contains large portions of fluids, the absorption bands of tissue are typical absorption bands of liquids having frequency bandwidth in ranges of several hundreds of GHz to a few THz. Efficient detection of these absorption bands is achieved when the modulation frequencies of the incident two-frequency light is in the same order of magnitude as the absorption width. If lower frequencies are used detection is still possible, but the sensitivity of the spectrometer is then reduced.

These and other aspects of the invention will be apparent from the embodiments described hereinafter by way of example and with reference to the accompanying drawings which include the following figures, wherein
Figure 1 shows a diagram of a spectrometer according to the invention;
Figure 2 shows a diagram of a further embodiment of a spectrometer according to the invention;
Figure 3 shows a diagram of a still further embodiment of a spectrometer according to the invention.

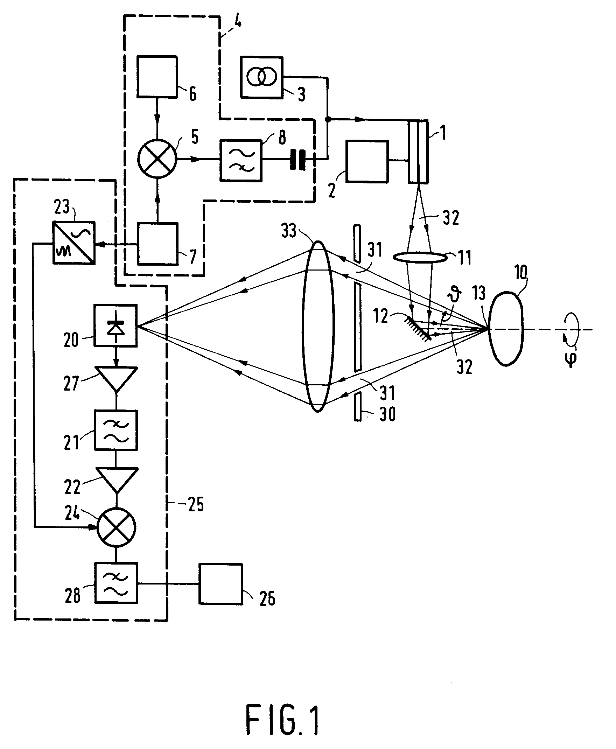

Figure 1 shows a diagram of a spectrometer according to the invention. The light source is for example a semiconductor laser 1 of which the temperature is stabilised by means of a temperature controller 2. In fact the temperature controller is formed by a Peltier element onto which the semiconductor laser is mounted. Current is injected into the semiconductor laser by a current source 3. The semiconductor laser is preferably a semiconductor laser which emits infrared light having a wavelength in the region of 750-850nm for which human tissue is reasonably penetrable. A GaAs/AlGaAs semiconductor laser, for example, is well suited for this purpose. A wavelength of 780nm is particularly preferred for examining human or animal tissue because at 780nm the absorption of light due to water and scattering in the tissue are low. At longer wavelengths the intensity of light exiting the sample is lower because the absorption due to water is stronger and at shorter wavelengths scattering within the sample is so strong that hardly any light can leave the sample.

FM modulation of the semiconductor laser output is accomplished by two-frequency modulation of the injection current. To this end a two-frequency modulator 4 is coupled to the current source 3. The two-frequency modulator 4 is built up as a mixer 5 to which an RF-generator 6 which operates at 1GHz and a signal generator 7 operating at 10MHz are coupled. High-frequency components of the signal of the mixer are selected by a high-pass filter 8 which supplies two closely spaced RF frequencies at 1GHz±10MHz to the current source 3, so that the injection current is modulated at these two closely spaced RF frequencies. The light source 1, temperature controller 2 current source 3 and the two-frequency modulator 4 form the illumination system. The light beam 32 supplied by the semiconductor laser is focused on a sample 10 by lens 11 *via* a mirror 12, so that a small spot 13 of the sample is illuminated.

For example, the sample may be a woman's breast which is to be examined for the presence of carcinomae. The spectrometer according to the invention may also be employed to perform image guided surgery, that is to image tissue together with a surgical instrument during surgery. The light which is incident of the sample is scattered at and below the surface of the sample. The amount of light which is scattered from inside the sample is dependent on the depth to which the incident light penetrates the sample. The penetration depth depends on the material properties of the sample and on the wavelength of the incident light. The mirror 12 is preferably rotatable, so that the spot 13 at which the light beam is incident of the sample is scanned over the surface of the sample 10. hence, the mirror 12 functions as a scanning means.

In the spectrometer of Figure 1 a photosensor 20, which is sensitive to infrared light in the wavelength range of the semiconductor laser 1, is set-up to intercept light which is predominantly scattered in backscattering directions. The photosensor is e.g. a photodiode or a photomultiplier which converts the intercepted light into an electronic detection signal. Because the light (generated by the light source 1) is two-frequency modulated and scattering thereof in the sample is frequency dependent, the light intensity of the scattered light varies in time with frequencies around the modulation frequencies of the two-frequency modulated light. Hence, the electronic detection signal has a Fourier transform that contains several side bands having different amplitudes. From the electronic detection signal a beat signal is formed which is representative for differences between amplitudes of the side bands of the electronic detection signal. To that end, the electronic detection signal is amplified by a pre-amplifier 27 to enhance its signal amplitude before further processing steps are performed, in which some of the signal amplitude may be lost. A low-frequency component having frequencies up to several MHz, of the electronic detection signal is retained by applying the electronic detection signal to a low-pass filter 21. The low-frequency component pertains to slow temporal variations at frequencies equal to differences between the two frequencies of the two-frequency modulated incident light. The low-pass filter has a cut-off frequency at one or a few times ten MHz, 30MHz say, so that only components of the electronic detection signal having a frequency that is equal to a difference of the frequencies of the modulation sidebands are passed through the low-pass filter 21. Thus, the components of the electronic detection signal with frequencies of the modulation sidebands at 1GHz±10MHz are eliminated by the low-pass filter 21. The low-frequency component from the low-pass filter 21 is amplified in an amplifier 22. The 10MHz signal of the signal generator 7 is frequency doubled in a frequency doubler 23 which supplies a 20MHz oscillator signal. The amplified low-frequency component of the electronic detection signal and the oscillator signal are mixed in a signal mixer 24 which beats the amplified low-frequency component against the oscillator signal. Hence, the signal mixer 24 forms a low-frequency beat signal with a frequency bandwidth of RF frequencies around 20MHz with an amplitude dependent on the difference between scattering properties of the sample 10 for frequency components of the two-frequency modulated incident light beam. The low-frequency beat signal may become frequency broadened because of electronic noise which is, for example, produced by the amplifier 22 and the pre-amplifier 27. To remove this noise, the low-frequency beat signal is supplied to a very-low pass filter 28 which has a cut-off frequency of only a few kHz. The very-low pass filter 28 forms a monitor signal which is representative of the DC component of the low-frequency beat signal.

The light-detection device 25 incorporates the photosensor 20 and further comprises the combination of the low-pass filter 21, the amplifier 22, the frequency doubler 23 and the signal mixer 24. The light-detection device 25 detects light which has been scattered in the sample 10 and supplies the monitor signal to a signal processing unit 26. The signal processing system which is arranged to process the electronic detection signal from the photosensor and comprises the pre-amplifier 21, the low-pass filter 21, the amplifier 22, the mixer 24 with the frequency doubler 23 and the very low-pass filter 28.

The light captured by the photosensor is that portion of the scattered light which exits from the sample 10 and having a scattering angle in a narrow range is selected by an aperture 30. The aperture 30 has a circular slit opening which allows light from the sample 10 to pass that has a propagation direction having an angle in a narrow range around ϑ with the central ray of the incident light beam. As the sample 10 is irradiated with light in the form of a narrow beam 32, the light that passes through the aperture 30 corresponds to a narrow range of scattering angles. Furthermore, the aperture 30 is preferably circular so as to allow light to pass irrespective of the polar angle φ. Hence, the intensity of light which is collected by the photosensor 20 is integrated over a range of 2π for the polar angle φ, so as to collect maximum luminous intensity. The light that has passed through the aperture 30 is collected by a lens 33 which focuses the light onto the photosensor 20. That is, the lenses 11 and 33 form the optical system which images the output face of the illumination system *via* the sample on the photosensor. The aperture 30 is preferably variable so as to vary the narrow range of scattering angles of the light which is collected by the photosensor 20. In particular this is achieved by mechanically adjusting the circular opening 31.

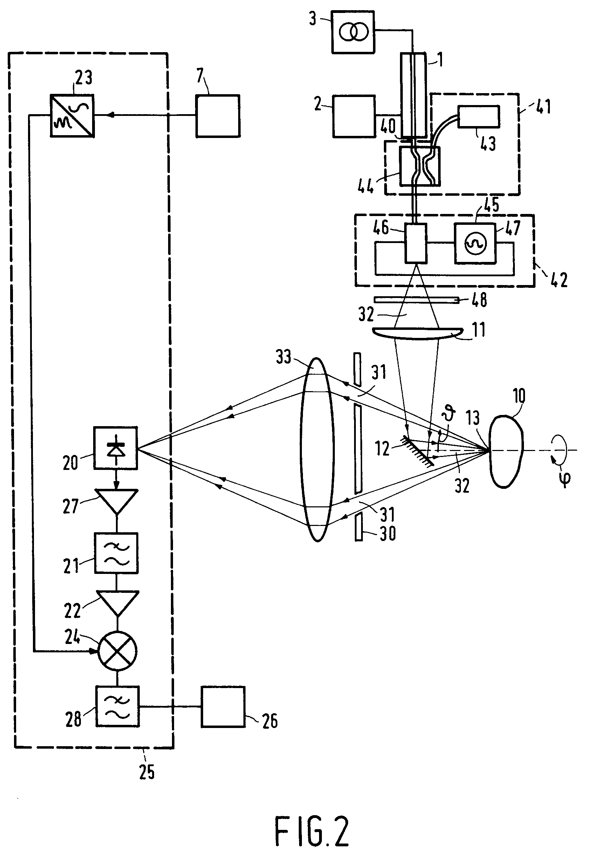

Figure 2 shows a diagram of a further embodiment of a spectrometer according to the invention. The semiconductor laser 1 is driven by a DC current source 3, which drives the semiconductor laser in a CW-mode. The light which exits the semiconductor laser 1 is coupled into an optical fibre 40. An optical very high frequency (VHF) modulator 41 and a low-frequency modulator 42 are respectively coupled to the optical fibre 40. The optical VHF modulator 41 is preferably an optical very high frequency (VHF) phase modulator 41 performs a phase modulation of the laser light at a very high modulation frequency of several hundreds of GHz, e.g. 300GHz, so that the optical VHF modulator 41 produces high-frequency FM modulated light having a frequency modulation at a modulation frequency of several hundreds of GHz. The low-frequency (LF) frequency modulator 42 performs a low-frequency modulation at an RF frequency of one or a few tens of MHz, say 10MHz to the high-frequency modulated light. Hence, the LF frequency modulator 42 supplies two-frequency modulated light having modulation frequencies of e.g. 300GHz±10MHz. The two-frequency modulated light is made incident on the sample space as described hereinbefore with reference to Figure 1 and light which is scattered in the sample space is detected also as described hereinbefore with reference to Figure 1.

The optical VHF phase modulator 41 comprises a high-frequency optical amplitude modulator 43 which supplies amplitude modulated light having a modulation frequency of several hundreds of GHz. Such a high-frequency optical amplitude modulator is for example constructed as a dual frequency fibre laser which forms the amplitude modulation as a beating of two optical frequencies supplied by the dual frequency fibre laser. Details of a dual frequency fibre laser are disclosed *per se* in the article *'Dual frequency all fibre grating laser source'* by S.V. Chernikov et al. in Electronics letters **29**(1993)1089-1090.

The amplitude modulated light is coupled into the fibre 40 by an optical coupler 44. The amplitude modulated light causes the refractive index of the fibre 40 to vary at the modulation frequency supplied by the high-frequency optical modulator 43. The refractive index variation is a result of non-linear electro-optical coupling. In other words, the refractive index of the fibre-material depends on the amplitude of the electrical field associated with the amplitude modulated light coupled into the fibre. Owing to the varying refractive index the phase of the incident light from the semiconductor laser is modulated at the modulation frequency of the high-frequency optical modulator. Hence, the optical coupler 44 functions as an optical phase modulator. As a result the light of the optical VHF phase modulator 41 supplies high-frequency modulated light having modulation sidebands at e.g. 300GHz from the central optical frequency of the light.

The high-frequency modulated light is subsequently supplied to the LF frequency modulator 42 which generates two-frequency modulated output light which is focused on the sample 10 by means of the lens 11 *via* the mirror 12. The LF frequency modulator 42 comprises an electro-optical modulator 45 which comprises an electro-optical crystal 46 to which an alternating voltage is supplied with a frequency of one or a few tens of MHz, 10MHz, say. The alternating voltage is generated by an AC-source 47 and causes a modulation of the refractive index of the electro-optical crystal 46 at the frequency of the alternating voltage. Owing to the refractive index modulation of the electro-optical crystal 46 the high frequency modulated light from the optical VHF modulator is again modulated with a frequency of one or a few tens of MHz and as a result the high-frequency modulated light supplied by the optical VHF phase modulator 41 is converted into two-frequency modulated light having modulation sidebands at for example 300GHz±10MHz. Preferably, the line-width of the semiconductor laser is less than the modulation frequencies of the two-frequency modulated light. When the two-frequency modulation frequencies are close together, such as a 20MHz no complicated and expensive high-frequency signal processing circuitry is required. However, the modulation sidebands may be up to 100MHz apart because photosensors and signal processing circuitry to process signals of about 100MHz are nowadays generally commercially available.

To avoid that the amplitude modulated light from the high-frequency optical amplitude modulator 43 reaches the sample 10, an optical filter 48 is placed in front of the lens 11. Preferably, the amplitude modulated light from the high-frequency amplitude modulator 43 has a wavelength which is appreciably different from the wavelengths of the two-frequency modulated light and the transmission characteristic of the optical filter 48 is arranged such that it allows the to pass the light from the light-source 1 that is two-frequency modulated, but blocks the amplitude modulated light that is produced by the high-frequency optical amplitude modulator and which is employed to cause a refractive index-modulation in the optical coupler 44. As an alternative, the optical filter 48 may be formed by a dichroic mirror which is arranged such that the wavelengths of the two-frequency modulated light are in the transmitting range of the dichroic mirror while the wavelengths of the amplitude modulated light from the high-frequency optical amplitude modulator 43 are within the reflecting range of the dichroic mirror, so that the amplitude modulated light does not reach the sample 10.

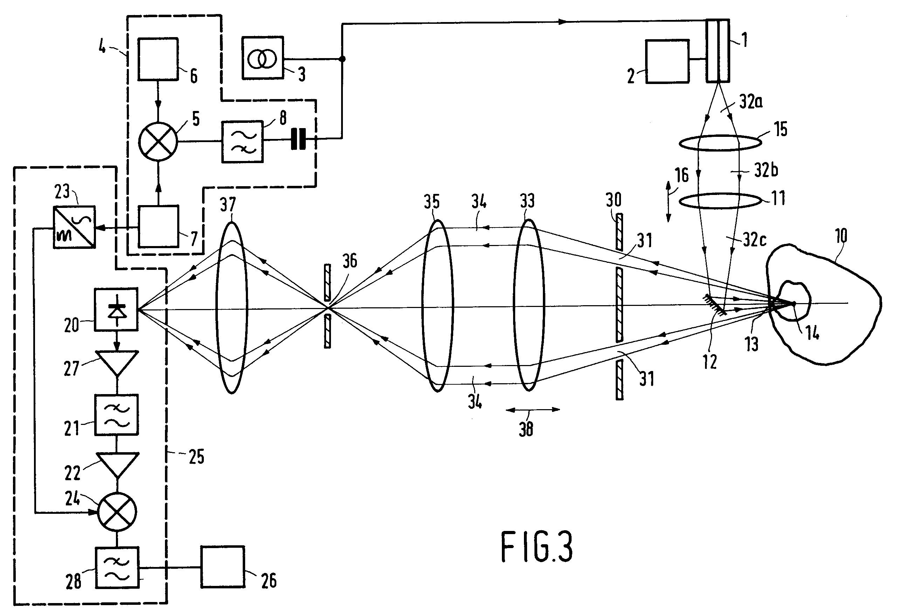

Figure 3 shows a diagram of a still further embodiment of a spectrometer according to the invention. The light beam 32a from the light source 1 is formed into a parallel beam 32b by a collimator lens 15. Subsequently, the light form the light source 1 is focused by lens 11 on a small portion 14 of the sample which is then illuminated by the convergent beam 32c. Said small portion is situated at an optical pathlength from lens 11 equal to the focal length of lens 11. The small portion of the sample on which the light of the convergent beam 32c is concentrated is selected by choosing a position of the lens 11 which is displaceable along the double arrow 16. The scattered light which leaves the sample from said small sample portion 14 and which passes through the circular slit opening 31 is formed into a parallel beam 34 by a collecting lens 33. As the lens 11 is positioned so as to concentrated the incident light on the small sample portion, the region around the small sample portion 14 is only weakly, if at all, illuminated. Behind the collecting lens 33 a focusing lens 35 is placed which focuses the incoming parallel beam 34 on a pin-hole diaphragm 36. Only light which leaves the small sample portion 14 may pass through the pin-hole diaphragm 36 and light which originates from outside said small sample portion 14, but nevertheless has passed through the focusing lens 35 has a propagation direction different from the parallel beam 34 and will be focused outside the pin-hole and will be blocked by the pin-hole diaphragm 36. The light which has passed the pin-hole diaphragm 36 originates only from the small sample portion 14 and contains scattering information of only said portion and is collected by a further lens 37 to be focused on a light-sensitive face of the photosensor 20. Because only the small sample portion 14 is at the focus of lens 33 only this portion is imaged sharply on the pin-hole diaphragm 36 which hardly receives any light from a region around the small sample portion 14. The lenses 11 and 33 form part of a confocal arrangement being incorporated in the optical system and having the small sample portion 14 at their common focus. In the embodiment according to Figure 3, the optical system for imaging the output face of the illumination system *via* the sample 10 on the photosensor 20 includes the lenses 11 and 33 and also lenses 15, 36,37 and the pin-hole diaphragm 36. By adjusting the positions of lenses 11 and 33 with respect to the sample the position of the small sample portion from which scattering light is collected at the photosensor is varied. Consequently, the positionable lenses 11 and 33 together with the rotatable mirror 12 are arranged to scan the light-beam over the sample and are thus comprised in the scanning means. Therefore, lens 33 is displaceable as indicated by the double arrow 38 so that the small sample portion 14 is at a distance from the lens 33 equal the focal length of lens 33. Cross-talk from the region around the small sample portion is further reduced by the pin-hole diaphragm 36 acting as a spatial filter.

Instead of two-frequency modulated light as described hereinbefore, the spectrometer may use light which is modulated with a multitude of three or more frequencies may be employed to study a sample. The relative amplitudes of frequency components of the detection signal represent the frequency dependence of scattering and/or absorption properties of a scattering centre in the sample. The more modulation frequencies are used the more spectral information of the scattered light can be derived from the detection signal.

## Claims

1. A multi-frequency spectrometer comprising
- an illumination system (1,2,3,4) with a light source (1) for illuminating at least a portion of a sample space with light having at least two frequencies,
- a frequency sensitive light detection device (25) with a photosensor (20) for detection of light leaving the sample,
- an optical system (11,33) for imaging the output face of the illumination system *via* a sample in the sample space on the photosensor,
- a signal processing system (27,28,22,23,24) for processing an electronic detection signal from the photosensor(20),
characterized in that
- the photosensor is positioned so as to receive light scattered by the sample (10).

2. A multi-frequency spectrometer as claimed in Claim 1, in which the illumination system (1,2,3,4) is arranged to illuminate a portion (13,14) of the sample space with a narrow light beam (32),
characterized in that
- the photosensor (20) is positioned so as to receive light scattered by the sample (10) along a direction different from the direction of incidence on the sample of the narrow light beam (32) from the illumination system (1,2,3,4).

3. A multi-frequency spectrometer as claimed in Claim 1 or Claim 2, characterized in that the optical system (33,35,36,37) is provided with a confocal optical arrangement.

4. A multi-frequency spectrometer as claimed in any one of Claims 2 or 3, characterized in that the optical system (33,35,36,37) is provided with scanning means (12,16,38) to scan the light beam (32) from the illumination system (1,2,3,4) over at least a portion of the sample (10).

5. A multi-frequency spectrometer as claimed in any one of Claims 1 to 4, characterized in that the signal processing system (27,21,22,23,24,28) comprises a mixer (24) to derive a beat signal from the frequency components of the electronic detection signal.

6. A multi-frequency spectrometer as claimed in any one of the preceding Claims, characterized in that the light source (1) is a semiconductor laser.

7. A multi-frequency spectrometer as claimed in any one of the preceding Claims, wherein the illumination system (1,2,3,4) comprises an optical modulator (41) to act on light generated by the light-source for generating light with said at least two frequencies, characterized in that said optical modulator is a frequency modulator.

8. A multi-frequency spectrometer as claimed in Claim 7, characterized in that the frequency modulator (41) comprises an optical phase modulator (44) arranged to modulate the phase of the light generated by the light source.
